# EUROPEAN PATENT SPECIFICATION

(11) **EP 1 039 464 B1**
(45) Date of publication and mention of the grant of the patent: **02.01.2004**
(21) Application number: 00302454.4
(22) Date of filing: 24.03.2000
(51) Int. Cl.: G11B 20/12, G11B 27/034

(54) **Recording and/or reproducing apparatus and method for a multi-session disc having a DVD application session**
Gerät und Verfahren zur Aufzeichnung und/oder Wiedergabe für eine Multi-Session Platte mit einer DVD Anwendung
Appareil et méthode d'enregistrement et/ou reproduction pour disque multisession ayant une session d' application de type DVD

(30) Priority: 25.03.1999 KR 9910270
(43) Date of publication of application: 27.09.2000
(73) Proprietor: SAMSUNG ELECTRONICS CO., LTD., Suwon-City, Kyungki-do (KR)
(72) Inventor: Heo, Jung-kwon, Seocho-gu, Seoul (KR); Oh, Young-nam, Seongnam-city, Kyungki-do (KR); Chung, Hyun-kwon, Kwangju-gun, Kyungki-do (KR)
(74) Representative: Chugg, David John

(56) References cited:
- EP-A- 0 797 205
- EP-A- 0 817 195
- EP-A- 0 878 799
- "Universal Disk Format Specification - Revision 1.50" 4 February 1997 (1997-02-04) , OPTICAL STORAGE TECHNOLOGY ASSOCIATION XP002147696 * page 100 - page 108 *

## Description

The present invention relates to recording and/or reproducing apparatus for multi-session discs having a digital versatile disc (DVD) application session the same and a method thereof.

DVD video format is used to record and reproduce high image quality video data and/or high sound quality audio data having a transmission rate of about 10 Mbps (mega bits per second). However, DVD is generally used by people who do large-scale marketing, such as film producers, since the manufacture of the DVD is a great expense.

At present, popular CDs have become much cheaper, and even common users can directly manufacture CDs with the spread of CD-R (Recordable). Also, 32x-speed CD drives are now on the market due to the development of techniques for CD drives.

General CDs include audio CDs, video CDs, and CD-ROMs. A CD-ROM is a disc having a logical format which is used for data recording of a computer in contrast to an audio CD or a video CD. These CDs are differentiated by control information in a sub-Q area of a lead-in area and top of contents (TOC) information. If an audio CD is prescribed in the control information in the sub-Q area, the CD is immediately recognized as an audio CD. If general data other than the audio CD is prescribed in the control information in the sub-Q area, the CD is recognized as a video CD or a CD-ROM.

Given that the transmission rate of CDs is about 1.5 Mbps, 8x-speed or greater CD drives have a 10 Mbps or faster transmission rate, so that data recording and reproduction at the same rate as the transmission rate of DVDs is possible. However, the recording time of CDs is much shorter than that of DVDs, so that CDs cannot record data for a long period of time. However, CDs can be used when high image quality reproduction is required for a short time for applications such as clips for presentation or promotion.

Multisession CDs can record at least two sessions having different formats such as an audio CD, a video CD and a CD-ROM. For example, on a multisession CD, several audio CD sessions and CD-ROM sessions can exist. Here, the CD-ROM session denotes a session having a logic format used for data recording by computers, in contrast to an audio CD. The sessions are distinguished by the TOC information in the lead-in area of a corresponding session of a disc. That is, when the TOC information in a corresponding session indicates a CD-ROM, existing audio CD players do not reproduce the CD-ROM session.

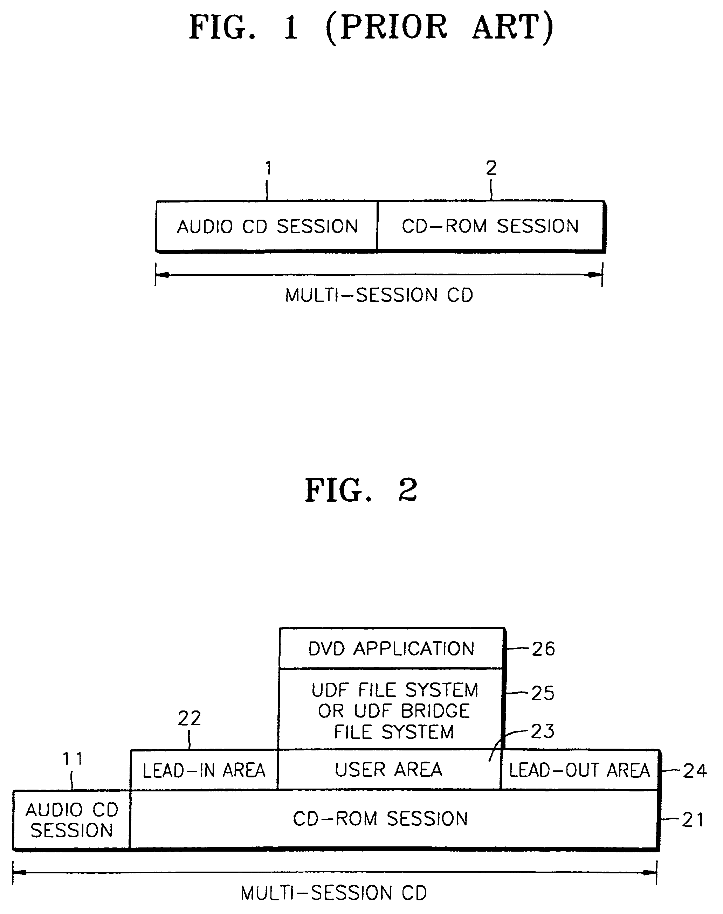

Therefore, a multisession CD shown in Figure 1 is a format designed so that only an audio CD session 1 is reproduced by general audio CD players, and a CD-ROM session 2, on which several data associated with the audio CD session are recorded, is used for computers or the like.

If a DVD application is recorded on the CD-ROM session existing on the multisession CD as proposed by the present invention, general CD players reproduce the audio information in the audio CD session, and DVD players reproduce the DVD application in the CD-ROM session. If a single album for an audio CD is produced, songs and musical performance can be recorded on the audio CD session, and the music video or the like of each song of a DVD application can be recorded on the CD-ROM session.

However, existing multisession CD recorders cannot record such data, so a new recorder is required. Existing CD/DVD dual-purpose players play only an audio CD by recognizing only an audio CD session, so that a DVD application written to a CD-ROM session cannot be reproduced since a reproduction process for DVD applications is not performed when a physical media used in existing CD/DVD dual- purpose players is a CD.

The document Optical Storage Technology Association (OSTA) "Universal Disc Format Specification", revision 1.50, 4/01/1997 discloses a multi-session disc "CD enhanced disc" of the CD-RW type including a compact disc read-only memory session, in which a lead-in area, a lead-out area and user area, each having a CD-ROM format are distinguished. In this disc a digital versatile disc application format based on a predetermined file system (UDF) is recorded in the user area.

EP-A-0878799 discloses a method of formatting rewritable compact optical discs. A disc is initially partially formatted for immediate usability, and then additional incremental formatting is provided until the disc is completely formatted. The additional formatting may take place while a drive is off-line. In one embodiment, data is written to an unformatted disc with data writing and formatting taking place simultaneously. In various example embodiments, lead-in and lead-out areas may be written first with nothing in between or lead-in and lead-out areas may optionally be written only if needed. This prior art is reflected in the preambles of claims 1 and 8.

EP-A-0817195 discloses a recording medium in which identification data signifying the existence of recorded data of a second data format (DSD) different from a first data format (DVD) is included in physical format management information recorded in a lead-in area. The data of such second data format is recorded in a data area in conformity with the physical format management information. Second data management information (TOC) is recorded at a predetermined position to manage an operation of reproducing the data of the second data format.

An aim of embodiments of the present invention is to provide a disc recording apparatus for recording DVD information on a multisession disc having a DVD application session.

Still another aim of embodiments of the present invention is to provide a disc reproducing apparatus for reproducing a multisession disc having a DVD application session.

Yet another aim is to provide a disc recording method of recording DVD information on a multisession disc having a DVD application session.

Still yet another aim is to provide a disc reproducing method of reproducing the information on a multisession disc having a DVD application session.

Additional aims and advantages of embodiments of the invention will be set forth in part in the description which follows and, in part, will be obvious from the description, or may be learned by practice of the invention.

According to a first aspect of the invention, there is provided an apparatus for recording/reproducing data on/from a multisession disc including a CD-ROM session in which a lead-in area, a lead-out area and a user area each having a CD-ROM format are distinguished, described in that the apparatus comprises: a first encoder for encoding received audio and/or video (A/V) signals in a DVD format to provide an A/V stream; a first formatter for formatting the A/V stream in a predetermined file system for DVD application; and a second formatter for writing data formatted in the predetermined file system to the user area, formatting data for the lead-in area and the lead-out area in a CD-ROM format, and writing CD-ROM formatted data to the lead-in area and the lead-out area.

The apparatus may further comprise: a second encoder for encoding received audio and/or video (A/V) signals in accordance with a CD application to provide an A/V stream; a third formatter for formatting the A/V stream received from the second encoder in a CD application format; and a fourth formatter for writing the output of the second formatter in a CD-ROM session format and writing the output of the third formatter in a CD session format, to provide multisession CD formatted data.

The predetermined file system may be a universal disc format (UDF) a universal disc format (UDF) bridge.

The apparatus may further comprise: a differentiator for determining whether a disc loaded into a drive is a video CD, an audio CD, or a multisession CD having a CD-ROM session; an analyzer for analyzing whether a predetermined file system exists, if it is determined by the differentiator that the disc is a multisession CD and that a corresponding session is a CD-ROM session; a first deformatter for deformatting a DVD application when the predetermined file system exists, and providing first deformatted data; and a first decoder for decoding the first deformatted data to restore the original A/V signal.

The apparatus may further comprise: a second deformatter for deformatting a CD application which has been read from a disc loaded into a drive, if it is determined by the differentiator that the disc is either a video CD or an audio CD or that the disc is a multisession CD and that a corresponding session is an audio CD session or a video CD session, and providing second deformatted data; and a second decoder for decoding the second deformatted data to restore the original A/V signal.

The apparatus may comprise: a first differentiator for determining whether a disc loaded into a DVD/CD-ROM dual purpose drive is a DVD or CD, by checking the physical structure of the disc; a second differentiator for determining whether the disc is a video CD, an audio CD or a multisession CD having a CD-ROM session, if it is determined by the first differentiator that the disc is a CD; an analyzer for analyzing whether a predetermined file system exists, if it is determined by the second differentiator that the disc is a multisession CD and that a corresponding session is a CD-ROM session, or if it is determined by the first differentiator that the disc is a DVD; a first deformatter for deformatting a DVD application stored on the disc loaded into the drive if the predetermined file system exists and providing first deformatted data; a first decoder for decoding the first deformatted data to restore the original A/V signal; a second deformatter for deformatting a CD application which has been read from the loaded disc, if it is determined by the second differentiator that the disc is either a video CD or audio CD, or that the disc is a multisession CD and that a corresponding session is an audio CD session or a video CD session, and providing second deformatted data; and a second decoder for decoding the second deformatted data to restore the original A/V signal.

According to another aspect of the invention, there is provided a method for recording/reproducing data on/from a multisession disc having a CD-ROM session in which a lead-in area, a lead-out area, and a user area each having a CD-ROM format, are distinguished, characterised by comprising: (a) encoding received audio and/or video (A/V) signals in a DVD format to provide an A/V stream; (b) formatting the A/V stream in a predetermined file system for DVD application; and (c) writing data formatted in the predetermined file system to the user area, formatting data for the lead-in area and the lead-out area in a CD-ROM format, and writing CD-ROM formatted data to the lead-in area and the lead-out area, to provide first formatted data.

The method may further comprise: (d) encoding received audio and/or video (A/V) signals in accordance with a CD application to provide an A/V stream; (e) formatting the A/V stream in a CD application format to provide second formatted data; and (f) writing the first formatted data in a CD-ROM session format and writing the second formatted data in a CD session format, to provide multisession CD formatted data.

The predetermined file system may be a universal disc format (UDF)or a universal disc format (UDF) bridge format.

The method may further comprise: (d) determining whether a disc loaded into a drive is a video CD, an audio CD or a multisession CD having a CD-ROM session; (e) determining whether a predetermined file system exists, if it is determined in step (d) that the disc is a multisession CD and that a corresponding session is a CD-ROM session; (f) deformatting a DVD application on the user area of the disc when the predetermined file system exists and providing first deformatted data; and (g) decoding the first deformatted data to restore the original A/V signal.

The method may further comprise: (h) deformatting a CD application which has been read from a loaded disc, if it is determined in step (d) that the disc is a video CD or an audio CD, or that the disc is a multisession CD and that a corresponding session is an audio CD session or a video CD session, and providing second deformatted data; and (i) decoding the second deformatted data to restore the original A/V signal.

The method may comprise: (d) determining whether a disc loaded into a drive is an audio CD, by analyzing control information in a sub-Q area of the lead-in area of the disc, and if the loaded disc is an audio CD, playing the audio CD, and otherwise, determining whether or not the disc is a video CD by analyzing top of contents (TOC) information; (e) analyzing the video CD information on the first track and playing a video CD according to analyzed video CD information, if it is determined in step (d) that the disc is a video CD, and, if it is determined in step (d) that the disc is not even a video CD, analyzing TOC information to determine whether or not the disc is a multisession CD including a CD-ROM session; and (f) analyzing a UDF and reproducing DVD data if it is determined in step (e) that the disc is a multisession CD and that a corresponding session is a CD-ROM session.

The method of may further comprise: (d) determining whether a disc loaded into a DVD/CD-ROM dual-purpose drive is a DVD or a CD, by checking the physical structure of the disc; (e) determining whether the disc is an audio CD, a video CD or a multisession CD having a CD-ROM session, if it is determined in step (d) that the physical structure of the disc is a CD; (f) determining whether a predetermined file system exists, if it is determined in step (d) that the physical structure of the disc is a DVD or if it is determined in step (e) that the disc is a multisession CD and that a corresponding session is a CD-ROM session; (g) deformatting a DVD application read from the loaded disc, when the predetermined file system exists, and providing first deformatted data; and (h) decoding the first deformatted data to restore the original A/V signal.

The method may further comprise: (i) deformatting a CD application, which has been read from the loaded disc, if it is determined in step (e) that the CD is a video CD or audio CD, or that the CD is a multisession CD and that a corresponding session is an audio CD session or a video CD session, and providing second deformatted data; and (j) decoding the second deformatted data to restore the original A/V signal.

The method may further comprise: (d) determining whether a disc loaded into a DVD/CD-ROM dual-purpose drive is a DVD or CD, by analyzing the physical structure of the disc; (e) determining whether the disc is an audio CD, by analyzing control information in a sub-Q area of the lead-in area of the disc, if it is determined in step (d) that the physical structure of the disc is a CD, and playing an audio CD if the disc is an audio CD, and, otherwise, determining whether or not the disc is a video CD by analyzing TOC information; (f) analyzing video CD information on the first track and playing a video CD according to analyzed video CD information, if it is determined in step (e) that the disc is a video CD, and, if it is determined in step (e) that the disc is not a video CD, determining whether or not the CD is a multisession CD having a CD-ROM session; and (g) analyzing a UDF and reproducing DVD data if it is determined in step (e) that the disc has the physical structure of a DVD or if it is determined in step (f) that the CD is a multisession CD and that a corresponding session is a CD-ROM session.

For a better understanding of the invention, and to show how embodiments of the same may be carried into effect, reference will now be made, by way of example, to the accompanying diagrammatic drawings in which:
Figure 1 is a view illustrating an example of a typical multisession CD;
Figure 2 is a view illustrating the structure of a multisession disc for use with the present invention;
Figure 3 is a block diagram illustrating a recording apparatus according to an embodiment of the present invention;
Figure 4 is a block diagram illustrating a reproducing apparatus according to an embodiment of the present invention;
Figure 5 is a block diagram illustrating a reproducing apparatus according to another embodiment of the present invention;
Figure 6 is a flowchart illustrating a reproducing method according to an embodiment of the present invention; and
Figure 7 is a flowchart illustrating a reproducing method according to another embodiment of the present invention.

Reference will now be made in detail to the present preferred embodiments of the present invention, example of which are illustrated in the accompanying drawings, wherein like reference numerals refer to the like elements throughout. The embodiments are described below in order to explain the present invention by referring to the figures.

An example of the structure of a disc for use with the present invention is shown in Figure 2, and a CD, a CD-R (Recordable) or a CD-RW (Rewritable) is used as the disc medium. The format of a multisession CD is used on a physical medium. In Figure 2, an audio CD session 11 and a CD-ROM session 21 are defined on the multisession CD. That is, a lead-in area 22, a user area 23, and a lead-out area 24 are distinguished in the CD-ROM session 21. Thus, both control information in the lead-in area 22 and TOC information use the same format as a general CD-ROM format. For example, the control information recorded in a sub-Q area of the lead-in area does not correspond to an audio CD. That is, the format used on the CD-ROM session 21 is a type of format for a CD-ROM which is different to the format of an audio CD or a video CD.

The logical format of the CD-ROM user area 23 follows a DVD format. The DVD format is based on a file system which is called a universal disk format (UDF). The specifications of a file system 25 for a DVD and a DVD application 26 which is based on the file system have already been defined by the DVD forum.

In the disc as shown in Figure 2, the lead-in area 22 and the lead-out area 24 are recorded in the format of a CD-ROM. The logical volume area of the user area 23 records the DVD application 26 based on the file system 25 such as a UDF file system or a UDF bridge format. Here, the UDF bridge format is a format where a UDF, and an international standard organization (ISO) 9660 format which is used in general CD-ROMs, coexist. A CD-ROM drive installed in a computer requires the ISO 9660 format to read a disc, so the UDF bridge format is used. However, the file system format can include only the UDF if the formats for the file system are all changed into the UDF with the lapse of time.

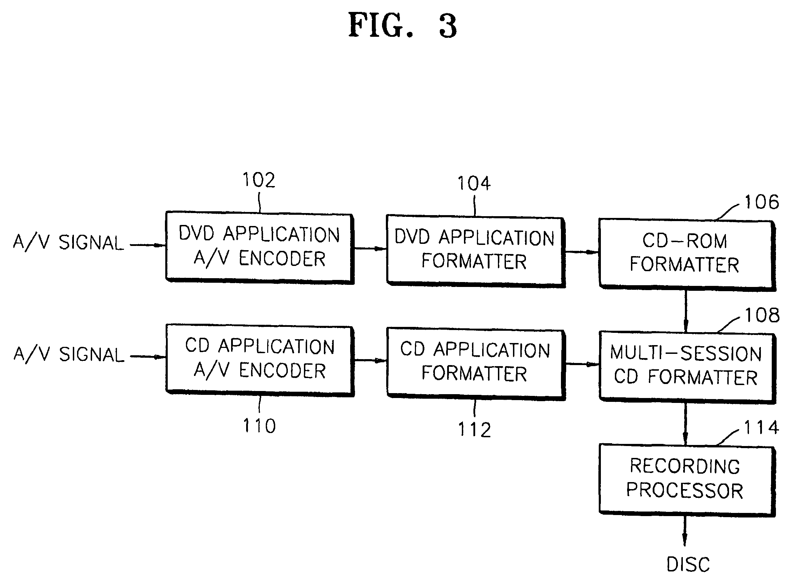

Figure 3 is a block diagram illustrating an embodiment of a disc recording apparatus according to the present invention, including a DVD application A/V encoder 102, a DVD application formatter 104, a CD-ROM formatter 106, a multisession CD formatter 108, a CD application A/V encoder 110, a CD application formatter 112 and a recording processor 114.

The DVD application A/V encoder 102 encodes received audio and/or video (A/V) signals in accordance with a DVD application. If a video signal is received, it is coded using a specification which is defined in a DVD video application book, and a coded video stream is provided. If an audio signal is received, it is encoded using a specification which is defined in a DVD audio application book, and an encoded audio stream is provided. The DVD application formatter 104 formats the encoded A/V streams received from the DVD application A/V encoder 102, and the information associated with the corresponding streams using a file system of a UDF or a UDF bridge format.

The CD-ROM formatter 106 writes the DVD application formatted data received from the DVD application formatter 104 to the user area on the CD-ROM session, and writes lead-in data and lead-out data, which are defined in the CD-ROM format, to the lead-in area and the lead-out area on the CD-ROM session. Thus, the CD-ROM formatter 106 provides CD-ROM formatted data to the multisession CD formatter 108.

The CD application A/V encoder 110 encodes received A/V signals in accordance with a CD application. The CD application formatter 112 formats the encoded A/V streams received from the CD application A/V encoder 110 using a CD application format, and provides CD application formatted data to the multisession CD formatter 108.

The multisession CD formatter 108 writes CD application formatted data received from the CD application formatter 112 in an audio session format or a video session format, and writes CD-ROM formatted data received from the CD-ROM formatter 106 in a CD-ROM session format, thereby forming a multisession CD. The recording processor 114 signal-processes multisession CD formatted data received from the multisession CD formatter 108, and records the resultant data on a CD.

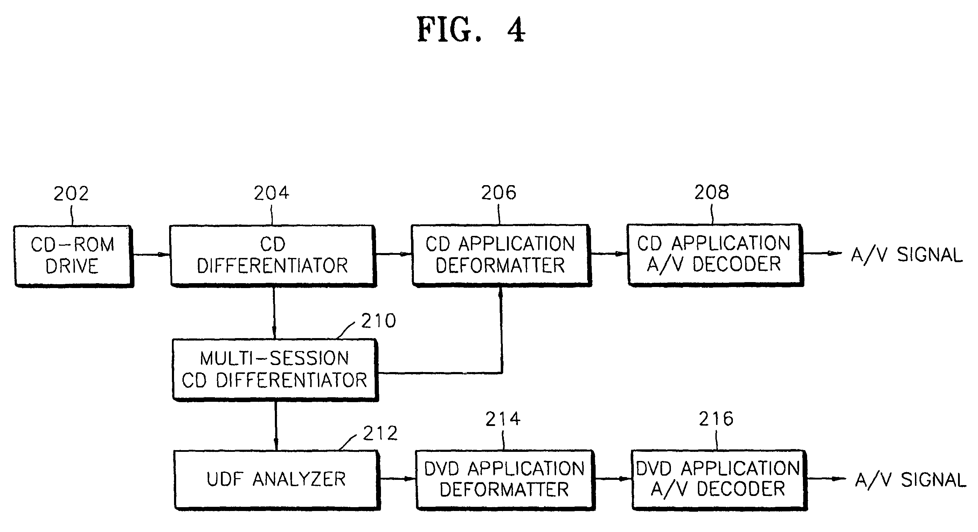

Figure 4 is a block diagram illustrating an embodiment of a reproducing apparatus according to the present invention. The reproducing apparatus includes a CD-ROM drive 202, a CD differentiator 204, a CD application deformatter 206, a CD application A/V decoder 208, a multisession CD differentiator 210, a UDF analyzer 212, a DVD application deformatter 214, and a DVD application A/V decoder 216.

When a disc is loaded into the CD-ROM drive 202 which supports an 8×-speed or faster transmission rate and accesses an audio CD, a video CD, and a multisession CD, the CD differentiator 204 determines whether the loaded disc is a general audio CD or a general video CD. That is, the CD differentiator 204 determines whether the disc loaded into the CD-ROM drive 202 is an audio CD, using the control information in the sub-Q area of the lead-in area on the disc. If it is determined that the disc is not an audio CD, the CD differentiator 204 analyses TOC information to determine whether the disc is a video CD. Then, the CD differentiator 204 provides a differentiation signal representing that the loaded disc is either an audio CD or a video CD to the CD application deformatter 206. On the other hand, if it is determined that the disc is neither an audio CD nor a video CD, the CD differentiator 204 provides a differentiation signal representing the result of the determination to the multisession CD differentiator 210.

The CD application deformatter 206 deformats data which has been picked up from the disc according to the differentiation signal representing that the loaded disc is either an audio CD or a video CD, in accordance with an audio CD application or a video CD application. The CD application A/V decoder 208 decodes CD application deformatted data to output the original A/V signal.

The multisession CD differentiator 210 analyzes TOC information again to determine whether the loaded disc is a multisession CD having a CD-ROM session, if the differentiation signal representing that the loaded disc is neither an audio CD nor a video CD is received from the CD differentiator 204. If it is determined that the loaded disc is a multisession CD and a corresponding session is a CD-ROM session, a differentiation signal representing the result of the determination is provided to the UDF analyzer 212. If it is determined that the loaded disc is a multisession CD and a corresponding session is an audio CD session or a video CD session, a differentiation signal representing the result of the determination is provided to the CD application deformatter 206.

The UDF analyzer 212 determines whether a UDF file system exists on the CD-ROM session, if the differentiation signal representing that the loaded disc is a multisession CD and a corresponding session is a CD-ROM session is received from the multisession CD differentiator 210. If it is determined that the disc has a UDF file system and that the file system is used for DVD application, the DVD application deformatter 214 deformats DVD application deformatted data read from the disc. The DVD application A/V decoder 216 decodes DVD application deformatted data to output the original A/V signal.

The reproducing apparatus shown in Figure 4 plays general CDs (e.g., an audio CD and a video CD) and a multisession CD proposed by embodiments of the present invention in which a DVD application session is included. However, the present invention is also applicable to an apparatus for playing only multisession CDs including a DVD application session without playing general CDs, the apparatus capable of including the CD-ROM drive 202, the CD differentiator 204, the multisession CD differentiator 210, the UDF analyzer 212, the DVD application deformatter 214, and the DVD application A/V decoder 216.

In Figure 4, the CD differentiator 204 and the multisession CD differentiator 210 are separately installed, but a single differentiator can perform the determinations of the above two differentiators by analyzing the TOC information in the lead-in area. That is, as for the single differentiator, if it is determined that the disc loaded into the CD-ROM drive 202 is either a video CD or an audio CD, a differentiation signal representing the result of the determination is provided to the CD application deformatter 206. If it is determined that the loaded disc is a multisession CD and a corresponding session is a CD-ROM session, a corresponding differentiation signal is provided to the UDF analyzer 212. On the other hand, if it is determined that the loaded disc is a multisession CD and a corresponding session is an audio CD session or a video CD session, a corresponding differentiation signal is provided to the CD application deformatter 206.

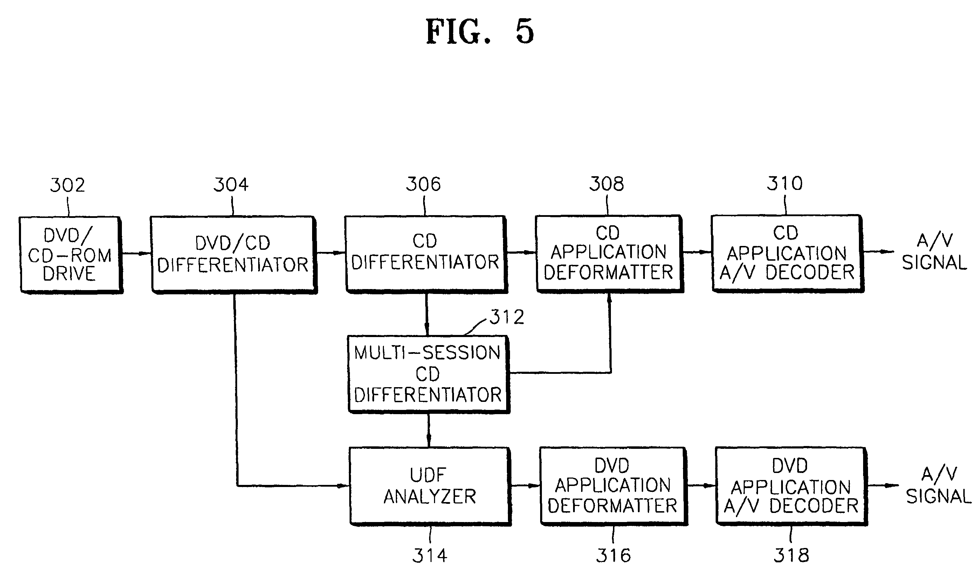

Figure 5 is a block diagram illustrating another embodiment of a disc reproducing apparatus according to the present invention. The disc reproducing apparatus includes a DVD/CD-ROM drive 302, a DVD/CD differentiator 304, a CD differentiator 306, a CD application deformatter 308, a CD application A/V decoder 310, a multisession CD differentiator 312, a UDF analyzer 314, a DVD application deformatter 316, and a DVD application A/V decoder 318, and can play both a general DVD and a disc in which a DVD application session is included.

The DVD/CD-ROM drive 302 can access a CD (an audio CD, a video CD and a multisession CD), and particularly, has a 8×-speed or faster transmission rate when the loaded disc is a CD. The DVD/CD differentiator 304 determines the physical structure of a loaded disc. If the loaded disc has a physical structure corresponding to a CD, the DVD/CD differentiator 304 provides a differentiation signal representing that the physical structure of the disc corresponds to a CD, to the CD differentiator 306, but if the loaded disc has a physical structure corresponding to a DVD, the DVD/CD differentiator 304 provides a differentiation signal representing that the physical structure of the disc corresponds to a DVD, to the UDF analyzer 314.

The CD differentiator 306 determines if the CD is an audio CD, a video CD, or neither an audio CD nor a video CD, if the differentiation signal representing that the loaded disc is a CD is received from the DVD/CD differentiator 304. If the CD is either an audio CD or a video CD, the CD differentiator 306 provides a differentiation signal representing that the CD is either an audio CD or video CD, to the CD application deformatter 308. If the CD is neither an audio CD nor a video CD, the CD differentiator 306 provides a differentiation signal representing the result of the determination to the multisession CD differentiator 312.

The multisession CD differentiator 312 determines whether or not the loaded disc is a multisession CD having a CD-ROM session, if it is determined that the loaded disc is neither an audio CD nor a video CD. If it is determined that the loaded disc is a multisession CD and a corresponding session is a CD-ROM session, a corresponding differentiation signal is provided to the UDF analyzer 314. If it is determined that the loaded disc is a multisession CD and a corresponding session is an audio CD session or a video CD session, a corresponding differentiation signal is provided to the CD application deformatter 308.

The structures and operations of the CD application deformatter 308, the CD application A/V decoder 310, the multi-session CD differentiator 312, the UDF analyzer 314, the DVD application deformatter 316, and the DVD application A/V decoder 318 are the same as those shown in Figure 4, so they will not be described again.

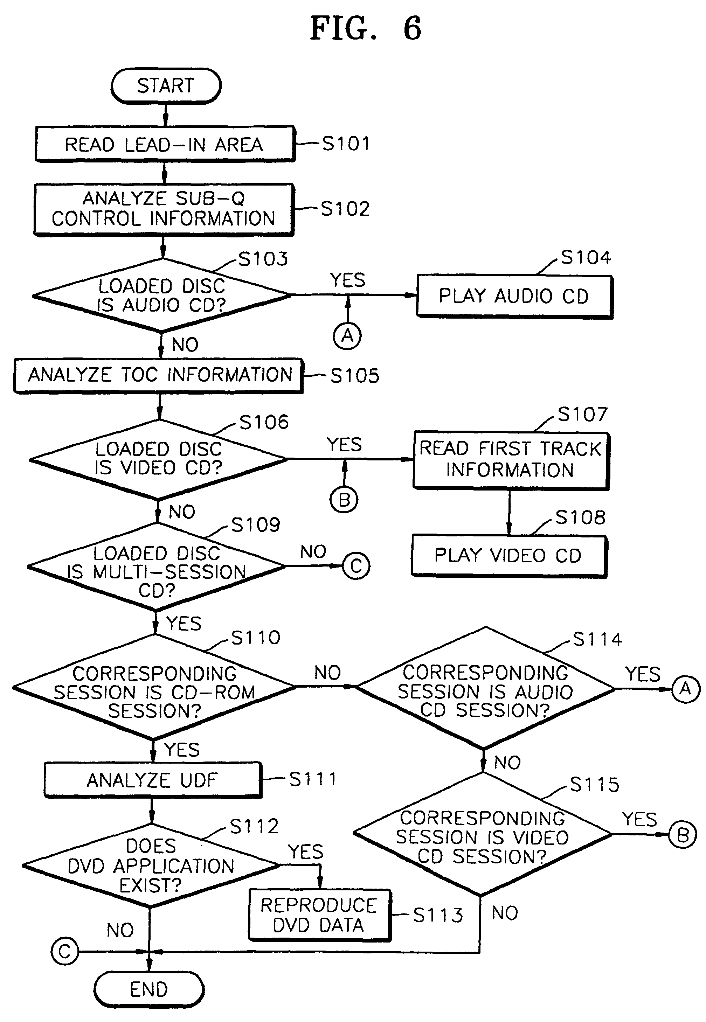

Figure 6, which is a flowchart illustrating an embodiment of a disc reproducing method according to the present invention, will now be described with reference to the disc reproducing apparatus shown in Figure 4. First, the information in the lead-in area of a disc loaded into the CD-ROM drive 202 is read, in step S101. Then, the control information in the sub-Q area of the lead-in area is analyzed, in step S102. If it is determined in step S103 that the control information in the sub-Q area corresponds to an audio CD, an audio title stored on the audio CD is played, in step S104. If it is determined in step S103 that the control information in the sub-Q area does not correspond to an audio CD, TOC information is analyzed, in step S105.

If it is determined in step S106 that the analyzed TOC information corresponds to a video CD, video CD information is read from a first track, in step S107. Then, a video title stored in the video CD is played according to the read first track information, in step S108.

Another determination as to whether or not the loaded disc is a multisession CD is made, if it is determined in step S106 that the loaded disc is not a video CD according to the analyzed TOC information, in step S109. If the loaded disc is a multisession CD, another determination as to whether or not a corresponding session is a CD-ROM session is made in step S110. If it is determined in step S110 that the corresponding session is a CD-ROM session, a UDF is analyzed in step S111, and then it is"determined whether or not a DVD application exists in the CD-ROM session in step S112. If it is determined in step S112 that a DVD application exists, DVD data is reproduced in step S113. Otherwise, the disc reproducing process is concluded.

If it is determined in step S110 that the loaded disc is a multisession CD but a corresponding session is not a CD-ROM session, another determination as to whether or not the corresponding session is an audio CD session is made in step S114. If the corresponding session is an audio CD session, the step S104 of playing the audio CD is performed. Otherwise, a determination as to whether the corresponding session is a video CD session is made in step S115. If it is determined in step S115 that the corresponding session is a video CD session, the step S107 of analyzing the information recorded on the first track of the corresponding session is performed, and then the step S108 of playing the video CD according to the analyzed information recorded on the first track is performed. Otherwise, the disc reproducing method is concluded.

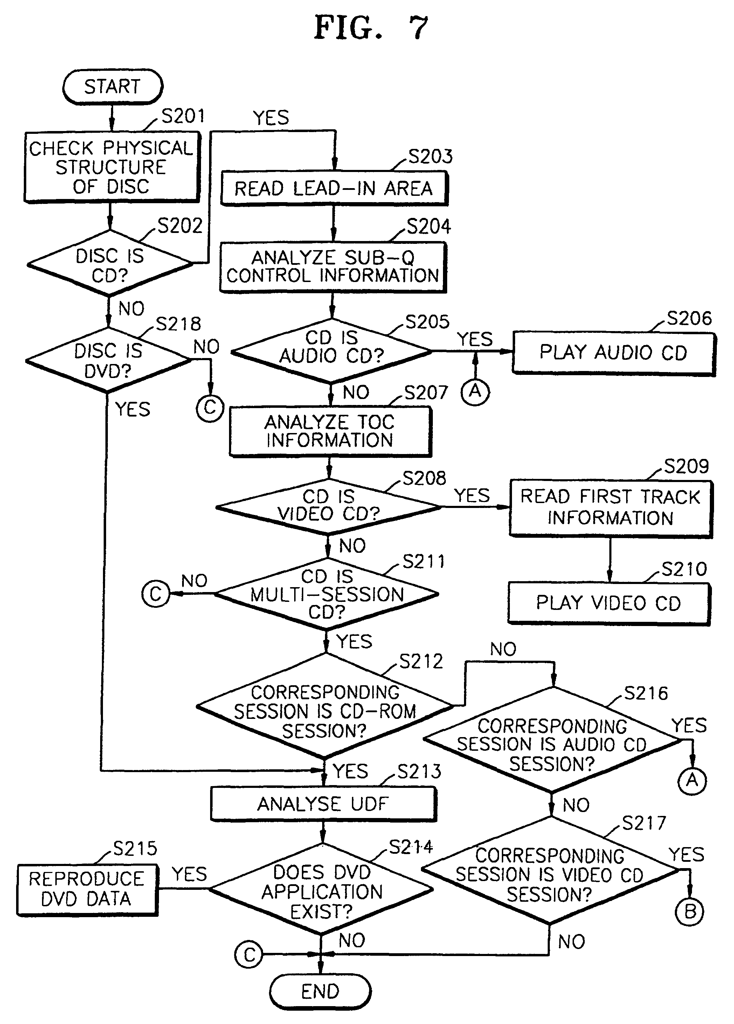

Figure 7, which is a flowchart illustrating another embodiment of a disc reproducing method according to the present invention, will now be described with reference to the reproducing apparatus shown in Figure 5. In Figure 7, the physical structure of a disc loaded into the DVD/CD-ROM drive 302 is checked, in step S201. A determination as to whether or not the physical structure of the loaded disc is a CD is made in step S202. If the physical structure thereof is a CD, the control information in the lead-in area is read in step S203. Steps S203 through S217 are the same as the steps S101 through S115 shown in Figure 6, so they will not be described again.

On the other hand, if it is determined in step S202 that the physical structure of the loaded disc is not a CD, another determination as to whether or not the physical structure thereof is a DVD is made in step S218. If it is determined in step S218 that the loaded disc is a DVD, the step S213 of analyzing a UDF is performed. Otherwise, the process is concluded.

As described above, the recording apparatus according to the present invention can record data, including a DVD application, on a multisession CD, and the multisession CD can be reproduced by the reproduction apparatus according to the present invention. Also, the present invention can be used for music video or presentation which requires reproduction for a short period of time using low-priced CD media, since DVD applications can be recorded on and reproduced from the CD media to obtain a multi-function, which is possible in DVD application, with a high image quality and a high sound quality.

Since the disc used with the present invention is a multisession CD, an audio CD session and a CD-ROM session including a DVD application can coexist on the disc. Therefore, general CD players will reproduce audio information, DVD players will reproduce the information in a DVD application, and audio CD players, which support a multisession CD including a DVD application, will reproduce the DVD application information as well as audio information.

## Claims

1. An apparatus for recording/reproducing data on/from a multisession disc including a CD-ROM session (21) in which a lead-in area (22), a lead-out area (24) and a user area (23) each having a CD-ROM format are distinguished, **characterized in that** the apparatus comprises:
a first encoder (102) for encoding received audio and/or video (A/V) signals in a DVD format to provide an A/V stream;
a first formatter (106) for formatting the A/V stream in a predetermined file system for DVD application; and
a second formatter for writing data formatted in the predetermined file system to the user area, formatting data for the lead-in area and the lead-out area in a CD-ROM format, and writing CD-ROM formatted data to the lead-in area and the lead-out area.

2. The apparatus of claim 1, further comprising:
a second encoder (110) for encoding received audio and/or video (A/V) signals in accordance with a CD application to provide an A/V stream;
a third formatter (112) for formatting the A/V stream received from the second encoder in a CD application format; and
a fourth formatter (108) for writing the output of the second formatter (106) in a CD-ROM session format and writing the output of the third formatter (112) in a CD session format, to provide multisession CD formatted data.

3. The apparatus of claim 1, wherein the predetermined file system is a universal disc format (UDF).

4. The apparatus of claim 1, wherein the predetermined file system is a universal disc format (UDF) bridge format.

5. The apparatus of claim 1, further comprising:
a differentiator (204, 210) for determining whether a disc loaded into a drive is a video CD, an audio CD, or a multisession CD having a CD-ROM session;
an analyzer (212) for analyzing whether a predetermined file system exists, if it is determined by the differentiator (204, 210) that the disc is a multisession CD and that a corresponding session is a CD-ROM session;
a first deformatter (214) for deformatting a DVD application when the predetermined file system exists, and providing first deformatted data; and
a first decoder (216) for decoding the first deformatted data to restore the original A/V signal.

6. The apparatus of claim 5, further comprising:
a second deformatter (206) for deformatting a CD application which has been read from a disc loaded into a drive, if it is determined by the differentiator (204, 210) that the disc is either a video CD or an audio CD or that the disc is a multisession CD and that a corresponding session is an audio CD session or a video CD session, and providing second deformatted data; and
a second decoder (208) for decoding the second deformatted data to restore the original A/V signal.

7. The apparatus of claim 1, further comprising:
a first differentiator (304) for determining whether a disc loaded into a DVD/CD-ROM dual purpose drive is a DVD or CD, by checking the physical structure of the disc;
a second differentiator (306, 312) for determining whether the disc is a video CD, an audio CD or a multisession CD having a CD-ROM session, if it is determined by the first differentiator (304) that the disc is a CD;
an analyzer (314) for analyzing whether a predetermined file system exists, if it is determined by the second differentiator (306, 312) that the disc is a multisession CD and that a corresponding session is a CD-ROM session, or if it is determined by the first differentiator (304) that the disc is a DVD;
a first deformatter (316) for deformatting a DVD application stored on the disc loaded into the drive if the predetermined file system exists and providing first deformatted data;
a first decoder (318) for decoding the first deformatted data to restore the original A/V signal;
a second deformatter (308) for deformatting a CD application which has been read from the loaded disc, if it is determined by the second differentiator (306, 312) that the disc is either a video CD or audio CD, or that the disc is a multisession CD and that a corresponding session is an audio CD session or a video CD session, and providing second deformatted data; and
a second decoder (310) for decoding the second deformatted data to restore the original A/V signal.

8. A method for recording/reproducing data on/from a multisession disc having a CD-ROM session in which a lead-in area, a lead-out-area, and a user area each having a CD-ROM format, are distinguished, **characterised by** comprising:
(a) encoding received audio and/or video (A/V) signals in a DVD format to provide an A/V stream;
(b) formatting the A/V stream in a predetermined file system for DVD application; and
(c) writing data formatted in the predetermined file system to the user area, formatting data for the lead-in area and the lead-out area in a CD-ROM format, and writing CD-ROM formatted data to the lead-in area and the lead-out area, to provide first formatted data.

9. The method of claim 8, further comprising:
(d) encoding received audio and/or video (A/V) signals in accordance with a CD application to provide an A/V stream;
(e) formatting the A/V stream in a CD application format to provide second formatted data; and
(f) writing the first formatted data in a CD-ROM session format and writing the second formatted data in a CD session format, to provide multisession CD formatted data.

10. The method of claim 8, wherein the predetermined file system is a universal disc format (UDF).

11. The method of claim 8, wherein the predetermined file system is a universal disc format (UDF) bridge format.

12. The method of claim 8, further comprising:
(d) determining whether a disc loaded into a drive is a video CD, an audio CD or a multisession CD having a CD-ROM session;
(e) determining whether a predetermined file system exists, if it is determined in step (d) that the disc is a multisession CD and that a corresponding session is a CD-ROM session;
(f) deformatting a DVD application on the user area of the disc when the predetermined file system exists and providing first deformatted data; and
(g) decoding the first deformatted data to restore the original A/V signal.

13. The method of claim 12, further comprising:
(h) deformatting a CD application which has been read from a loaded disc, if it is determined in step (d) that the disc is a video CD or an audio CD, or that the disc is a multisession CD and that a corresponding session is an audio CD session or a video CD session, and providing second deformatted data; and
(i) decoding the second deformatted data to restore the original A/V signal.

14. The method of claim 8, further comprising:
(d) determining whether a disc loaded into a drive is an audio CD, by analyzing control information in a sub-Q area of the lead-in area of the disc, and if the loaded disc is an audio CD, playing the audio CD, and otherwise, determining whether or not the disc is a video CD by analyzing top of contents (TOC) information;
(e) analyzing the video CD information on the first track and playing a video CD according to analyzed video CD information, if it is determined in step (d) that the disc is a video CD, and, if it is determined in step (d) that the disc is not even a video CD, analyzing TOC information to determine whether or not the disc is a multisession CD including a CD-ROM session; and
(f) analyzing a UDF and reproducing DVD data if it is determined in step (e) that the disc is a multisession CD and that a corresponding session is a CD-ROM session.

15. The method of claim 8, further comprising:
(d) determining whether a disc loaded into a DVD/CD-ROM dual-purpose drive is a DVD or a CD, by checking the physical structure of the disc;
(e) determining whether the disc is an audio CD, a video CD or a multisession CD having a CD-ROM session, if it is determined in step (d) that the physical structure of the disc is a CD;
(f) determining whether a predetermined file system exists, if it is determined in step (d) that the physical structure of the disc is a DVD or if it is determined in step (e) that the disc is a multisession CD and that a corresponding session is a CD-ROM session;
(g) deformatting a DVD application read from the loaded disc, when the predetermined file system exists, and providing first deformatted data; and
(h) decoding the first deformatted data to restore the original A/V signal.

16. The method of claim 15, further comprising:
(i) deformatting a CD application, which has been read from the loaded disc, if it is determined in step (e) that the CD is a video CD or audio CD, or that the CD is a multisession CD and that a corresponding session is an audio CD session or a video CD session, and providing second deformatted data; and
(j) decoding the second deformatted data to restore the original A/V signal.

17. The method of claim 8, further comprising:
(d) determining whether a disc loaded into a DVD/CD-ROM dual-purpose drive is a DVD or CD, by analyzing the physical structure of the disc;
(e) determining whether the disc is an audio CD, by analyzing control information in a sub-Q area of the lead-in area of the disc, if it is determined in step (d) that the physical structure of the disc is a CD, and playing an audio CD if the disc is an audio CD, and, otherwise, determining whether or not the disc is a video CD by analyzing TOC information;
(f) analyzing video CD information on the first track and playing a video CD according to analyzed video CD information, if it is determined in step (e) that the disc is a video CD, and, if it is determined in step (e) that the disc is not a video CD, determining whether or not the CD is a multisession CD having a CD-ROM session; and
(g) analyzing a UDF and reproducing DVD data if it is determined in step (e) that the disc has the physical structure of a DVD or if it is determined in step (f) that the CD is a multisession CD and that a corresponding session is a CD-ROM session.

## Patentansprüche

1. Gerät zum Aufzeichnen/Wiedergeben von Daten auf/von einer Multisession-Platte angegeben, die eine CD-ROM-Session (21) enthält, in der sich ein Lead-In-Bereich (22), ein Lead-Out-Bereich (24) und ein Benutzerbereich (23), die jeweils ein CD-ROM-Format haben, voneinander unterscheiden, **dadurch gekennzeichnet, daß** das Gerät enthält:
eine erste Codiereinrichtung (102) zum Codieren empfangener Audio- und/oder Video- (A/V-) Signale in einem DVD-Format, um einen A/V-Strom zu erzeugen;
eine erste Formatiereinrichtung (106) zum Formatieren des A/V-Stroms in einem vorbestimmten Dateisystem für eine DVD-Anwendung;
und eine zweite Formatiereinrichtung zum Schreiben von Daten, die im vorbestimmten Dateisystem formatiert sind, in den Benutzerbereich, zum Formatieren der Daten für den Lead-In-Bereich und den Lead-Out-Bereich in einem CD-ROM-Format und zum Schreiben CD-ROM-formatierter Daten in den Lead-In-Bereich und in den Lead-Out-Bereich.

2. Gerät nach Anspruch 1, weiterhin enthaltend:
eine zweite Codiereinrichtung (110) zum Codieren empfangener Audio- und/oder Video- (A/V-) Signale in Übereinstimmung mit einer CD-Anwendung, um einen A/V-Strom zu erzeugen;
eine dritte Formatiereinrichtung (112) zum Formatieren des A/V-Stroms, der von der zweiten Codiereinrichtung empfangen wird, in einem CD-Anwendungsformat;
und eine vierte Formatiereinrichtung (108) zum Schreiben der Ausgabe der zweiten Formatiereinrichtung (106) in einem CD-Sessionformat und Schreiben der Ausgabe der dritten Formatiereinrichtung (112) in einem CD-Sessionformat, um formatierte Daten einer Multisession-CD zu erzeugen.

3. Gerät nach Anspruch 1, wobei das vorbestimmte Dateisystem ein UDF (Universal Disc Format) ist.

4. Gerät nach Anspruch 4, bei dem das vorbestimmte Dateisystem ein UDF (Universal Disk Format), oder ein UDF-Brückenformat ist.

5. Gerät nach Anspruch 1, weiterhin enthaltend:
eine Differenziereinrichtung (204, 210) zum Ermitteln, ob eine in das Laufwerk eingelegte Platte eine Video-CD, eine Audio-CD oder eine Multisession-CD mit einer CD-ROM-Session ist;
eine Analysiereinrichtung (212) zum Analysieren ob ein vorbestimmtes Dateisystem existiert, sofern durch die Differenziereinrichtung (204, 210) ermittelt wird, daß die Platte eine Multisession-CD ist und daß eine entsprechende Session eine CD-ROM-Session ist;
eine erste Deformatiereinrichtung (244) zum Deformatieren einer DVD-Anwendung, sofern das vorbestimmte Dateisystem vorhanden ist, und zum Erzeugen erster deformatierter Daten;
und eine erste Decodiereinrichtung (216) zum Decodieren der ersten deformatierten Daten, um das ursprüngliche A/V-Signal wiederherzustellen.

6. Gerät nach Anspruch 5, weiterhin enthaltend:
eine zweite Deformatiereinrichtung (206) zum Deformatieren einer CD-Anwendung, die von einer Platte gelesen wurde, die in ein Laufwerk eingelegt ist, sofern durch die Differenziereinrichtung (204, 210) ermittelt wurde, daß die Platte entweder eine Video-CD oder eine Audio-CD ist, oder daß die Platte eine Multisession-CD ist, und daß eine entsprechende Session eine Audio-CD-Session oder eine Video-CD-Session ist, und zum Erzeugen zweiter deformatierter Daten;
und eine zweite Dekodiereinrichtung (208) zum Dekodieren der zweiten deformatierten Daten, um das ursprüngliche AN-Signal wiederherzustellen.

7. Gerät nach Anspruch 1, weiterhin enthaltend:
eine erste Differenziereinrichtung (304) zum Ermitteln ob eine in ein DVD/CD-ROM-Dual-Laufwerk eingelegte Platte eine DVD oder ein CD ist, indem die physikalische Struktur der Platte geprüft wird;
eine zweite Differenziereinrichtung (306, 312) zum Ermitteln ob die Platte eine Video-CD, eine Audio-CD oder eine Multisession-CD mit einer CD-ROM-Session ist, sofern durch die erste Differenziereinrichtung (304) ermittelt wird, daß die Platte eine CD ist;
eine Analysiereinrichtung (314) zum Analysieren ob ein vorbestimmtes Dateisystem vorhanden ist, wenn durch die zweite Differenziereinrichtung (306, 312) ermittelt wird, daß die Platte eine Multisession-CD und eine entsprechende Session eine CD-ROM-Session ist, oder wenn durch die erste Differenziereinrichtung (304) ermittelt wird, daß die Platte eine DVD ist;
eine erste Deformatiereinrichtung (316) zum Deformatieren einer DVD-Anwendung, die auf der Platte gespeichert ist, die in das Laufwerk eingelegt ist, sofern das vorbestimmte Dateisystem vorhanden ist, und zum Erzeugen erster deformatierter Daten;
eine erste Decodiereinrichtung (318) zum Decodieren der ersten deformatierten Daten, um das ursprüngliche AN-Signal wiederherzustellen;
eine zweite Deformatiereinrichtung (308) zum Deformatieren einer CD-Anwendung, die von der eingelegten Platte gelesen wurde, wenn durch die zweite Differenziereinrichtung (306, 312) ermittelt wird, daß die Platte entweder eine Video-CD oder eine Audio-CD ist, oder daß die Platte eine Multisession-CD und eine entsprechende Session eine Audio-CD-Session oder eine Video-CD-Session ist, und zum Erzeugen zweiter deformatierter Daten;
und eine zweite Dekodiereinrichtung (310) zum Dekodieren der zweiten deformatierten Daten, um das ursprüngliche AN-Signal wiederherzustellen.

8. Verfahren zum Aufzeichnen/Wiedergeben von Daten von/auf einer Multisession-Platte mit einer CD-ROM-Session, in der sich ein Lead-In-Bereich, ein Lead-Out-Bereich und ein Benutzerbereich unterscheiden, die jeweils ein CD-ROM-Format haben, **dadurch gekennzeichnet, daß** es umfaßt:
(a) Codieren empfangener Audio- und/oder Video- (AN-) Signale in einem DVD-Format, um einen AN-Strom zu erzeugen;
(b) Formatieren das AN-Stroms in einem vorbestimmten Dateisystem für eine DVD-Anwendung; und
(c) Schreiben der Daten, die im vorbestimmten Dateisystem formatiert sind, in den Benutzerbereich, Formatieren von Daten für den Lead-In-Bereich und den Lead-Out-Bereich in einem CD-ROM-Format und Schreiben der CD-ROM-formatierten Daten in den Lead-In-Bereich und den Lead-Out-Bereich, um erste formatierte Daten zu erzeugen.

9. Verfahren nach Anspruch 8, weiterhin umfassend:
(d) das Codieren empfangener Audio- und/oder Video- (AN-) Signale in Übereinstimmung mit einer CD-Anwendung, um einen AN-Datenstrom zu erzeugen;
(e) Formatieren des AN-Stroms in einem CD-Anwendungsformat, um zweite formatierte Daten zu erzeugen;
und (f) Schreiben der ersten formatierten Daten in einem CD-ROM-Sessionformat und Schreiben der zweiten formatierten Daten in einem CD-Sessionformat, um multisession-CD-formatierte Daten zu erzeugen.

10. Verfahren nach Anspruch 8, wobei das vorbestimmte Dateisystem ein UDF (Universal Disc Format) ist.

11. Verfahren nach Anspruch 8, bei dem das vorbestimmte Dateisystem ein UDF-(Universal Disk Format) Brückenformat ist.

12. Verfahren nach Anspruch 8, weiterhin enthaltend:
(d) Ermitteln ob eine in das Laufwerk eingelegte Platte eine Video-CD, eine Audio-CD oder eine Multisession-CD mit einer CD-ROM-Session ist;
(e) Ermitteln ob ein vorbestimmtes Dateisystem vorhanden ist, sofern in Schritt (d) ermittelt wird, daß die Platte eine Multisession-CD und eine entsprechende Session eine CD-ROM-Session ist;
(f) Deformatieren einer DVD-Anwendung im Benutzerbereich der Platte, wenn das vorbestimmte Dateisystem vorhanden ist, und zum Erzeugen erster deformatierter Daten; und
(g) Decodieren der ersten deformatierten Daten, um das ursprüngliche A/V-Signal wiederherzustellen.

13. Verfahren nach Anspruch 12, weiterhin enthaltend:
(h) Deformatieren einer CD-Anwendung, die von einer eingelegten Platte gelesen wurde, sofern in Schritt (d) ermittelt wird, daß die Platte eine Video-CD oder eine Audio-CD ist, oder daß die Platte eine Multisession-CD und eine entsprechende Session eine Audio-CD-Session oder eine Video-CD-Session ist, und Erzeugen zweiter deformatierter Daten; und
(i) Decodieren der zweiten deformatierten Daten, um das ursprüngliche AN-Signal wiederherzustellen.

14. Verfahren nach Anspruch 8, weiterhin enthalten:
(d) Ermitteln ob eine in das Laufwerk eingelegte Platte eine Audio-CD ist, indem die Steuerinformationen in einem Sub-Q-Bereich des Lead-In-Bereiches der Platte analysiert werden, und wenn die eingelegte Platte eine Audio-CD ist, Abspielen der Audio-CD und andernfalls Ermitteln ob die Platte eine Video-CD ist, indem die TOC- (Top Of Contents-) Informationen analysiert werden;
(e) Analysieren der Video-CD-Informationen auf der ersten Spur und Abspielen einer Video-CD gemäß der analysierten Video-CD-Informationen, wenn in Schritt (d) ermittelt wird, daß die Platte eine Video-CD ist, und, wenn in Schritt (d) ermittelt wird, daß die Platte keine Video-CD ist, Analysieren der TOC-Informationen, um zu Ermitteln, ob die Platte eine Multisession-CD mit einer CD-ROM-Session ist; und
(f) Analysieren eines UDF und Wiedergeben von DVD-Daten, wenn in Schritt (e) ermittelt wird, daß die Platte eine Multisession-CD und eine entsprechende Session eine CD-ROM-Session ist.

15. Verfahren nach Anspruch 8, weiterhin umfassend:
(d) Ermitteln ob eine in ein DVD/CD-ROM-Dual-Laufwerk eingelegte Platte eine DVD oder eine CD ist, indem der physikalische Aufbau der Platte geprüft wird;
(e) Ermitteln ob die Platte eine Audio-CD, eine Video-CD oder eine Multisession-CD mit einer CD-ROM-Session ist, wenn in Schritt (d) ermittelt wird, daß der physikalische Aufbau der Platte eine CD ist;
(f) Ermitteln ob ein vorbestimmtes Dateisystem vorhanden ist, wenn in Schritt (d) ermittelt wird, daß der physikalische Aufbau der Platte eine DVD ist, oder wenn in Schritt (e) ermittelt wird, daß die Platte eine Multisession-CD und daß eine entsprechende Session eine CD-ROM-Session ist;
(g) Deformatieren einer DVD-Anwendung, die von der eingelegten Platte gelesen wurde, wenn das vorbestimmte Dateisystem vorhanden ist, und Erzeugen erster deformatierter Daten; und
(h) Decodieren der ersten deformatierten Daten, um das ursprüngliche AN-Signal wiederherzustellen.

16. Verfahren nach Anspruch 15, weiterhin beinhaltend:
(i) Deformatieren einer CD-Anwendung, die von der eingelegten Platte gelesen wurde, wenn in Schritt (e) ermittelt wird, daß die CD eine Video-CD oder eine Audio-CD oder die CD eine Multisession CD ist und daß eine entsprechende Session eine Audio-CD-Session oder eine Video-CD-Session ist, und Erzeugen zweiter deformatierter Daten; und
(j) Decodieren der zweiten deformatierten Daten, um das ursprüngliche A/V-Signal wiederherzustellen.

17. Verfahren nach Anspruch 8, weiterhin umfassend:
(d) Ermitteln ob eine in ein DVD/CD-ROM-Dual-Laufwerk eingelegte Platte eine DVD oder eine CD ist, indem der physikalische Aufbau der Platte analysiert wird;
(e) Ermitteln ob die Platte eine Audio-CD ist, indem Steuerinformationen in einem Sub-Q-Bereich des Lead-In-Bereiches der Platte analysiert werden, wenn in Schritt (d) ermittelt wird, daß der physikalische Aufbau der Platte eine CD ist, und Abspielen einer Audio-CD, wenn die Platte eine Audio-CD ist, und andernfalls Ermitteln ob die Platte eine Video-CD ist oder nicht, indem TOC-Informationen analysiert werden;
(f) Analysieren von Video-CD-Informationen auf der ersten Spur und Abspielen einer Video-CD gemäß der analysierten Video-CD-Informationen, wenn in Schritt (e) ermittelt wird, daß die Platte eine Video-CD ist, und, sofern in Schritt (e) ermittelt wird, daß die Platte keine Video-CD ist, Ermitteln ob die CD eine Multisession-CD mit einer CD-ROM-Session ist; und
(g) Analysieren eines UDF und Wiedergeben von DVD-Daten, wenn in Schritt (e) ermittelt wird, daß die Platte den physikalischen Aufbau einer DVD hat, oder wenn in Schritt (f) ermittelt wird, daß die CD eine Multisession-CD und eine entsprechende Session eine CD-ROM-Session ist.

## Revendications

1. Dispositif pour enregistrer des données sur un disque multisession incluant une session de CD-ROM (21) ou lire des données à partir de ce dernier, dans laquelle session une zone blanche de début de session (22), une zone blanche de fin de session (24) et une zone utilisateur (23) ayant chacune un format de CD-ROM sont distinguées, **caractérisé en ce que** le dispositif comporte :
un premier codeur (102) pour coder des signaux audio et/ou vidéo (A/V) reçus dans un format de DVD pour délivrer un flux A/V,
un premier module de formatage (106) pour formater le flux A/V dans un système de fichiers prédéterminé pour une application DVD, et
un deuxième module de formatage pour écrire des données formatées dans le système de fichiers prédéterminé dans la zone utilisateur, formater des données relatives à la zone blanche de début de session et la zone blanche de fin de session dans un format de CD-ROM, et écrire les données en format de CD-ROM dans la zone blanche de début de session et la zone blanche de fin de session.

2. Dispositif selon la revendication 1, comportant en outre :
un second codeur (110) pour coder des signaux audio et/ou vidéo (A/V) reçus conformément à une application CD pour délivrer un flux A/V,
un troisième module de formatage (112) pour formater le flux A/V reçu depuis le second codeur dans un format d'application CD, et
un quatrième module de formatage (108) pour écrire la sortie du deuxième module de formatage (106) dans un format de session de CD-ROM et écrire la sortie du troisième module de formatage (112) dans un format de session de CD, pour délivrer des données en format de CD multisession.

3. Dispositif selon la revendication 1, dans lequel le système de fichiers prédéterminé est un format de disque universel (UDF).

4. Dispositif selon la revendication 1, dans lequel le système de fichiers prédéterminé est un format de transition de format de disque universel (UDF).

5. Dispositif selon la revendication 1, comportant en outre :
un différenciateur (204, 210) pour déterminer si un disque inséré dans un lecteur est un CD vidéo, un CD audio, ou un CD multisession ayant une session de CD-ROM,
un analyseur (212) pour analyser si un système de fichiers prédéterminé existe, s'il est déterminé par le différenciateur (204, 210) que le disque est un CD multisession et qu'une session correspondante est une session de CD-ROM,
un premier module de déformatage (214) pour déformater une application DVD lorsque le système de fichiers prédéterminé existe, et délivrer des premières données déformatées, et
un premier décodeur (216) pour décoder les premières données déformatées pour rétablir le signal A/V d'origine.

6. Dispositif selon la revendication 5, comportant en outre :
un second module de déformatage (206) pour déformater une application CD qui a été lue à partir d'un disque inséré dans un lecteur, s'il est déterminé par le différenciateur (204, 210) que le disque est un CD vidéo ou un CD audio ou que le disque est un CD multisession et qu'une session correspondante est une session de CD audio ou une session de CD vidéo, et délivrer des secondes données déformatées, et
un second décodeur (208) pour décoder les secondes données déformatées pour rétablir le signal A/V d'origine.

7. Dispositif selon la revendication 1, comportant en outre :
un premier différenciateur (304) pour déterminer si un disque inséré dans un lecteur à double usage DVD/CD-ROM est un DVD ou un CD, en vérifiant la structure physique du disque,
un second différenciateur (306), 312) pour déterminer si le disque est un CD vidéo, un CD audio ou un CD multisession ayant une session de CD-ROM, s'il est déterminé par le premier différenciateur (304) que le disque est un CD,
un analyseur (314) pour analyser si un système de fichiers prédéterminé existe, s'il est déterminé par le second différenciateur (306, 312) que le disque est un CD multisession et qu'une session correspondante est une session de CD-ROM, ou s'il est déterminé par le premier différenciateur (304) que le disque est un DVD,
un premier module de déformatage (316) pour déformater une application DVD mémorisée sur le disque inséré dans le lecteur si le système de fichiers prédéterminé existe et délivrer des premières données déformatées,
un premier décodeur (318) pour décoder les premières données déformatées pour rétablir le signal A/V d'origine,
un second module de déformatage (308) pour déformater une application CD qui a été lue à partir du disque inséré, s'il est déterminé par le second différenciateur (306, 312) que le disque est un CD vidéo ou un CD audio, ou que le disque est un CD multisession et qu'une session correspondante est une session de CD audio ou une session de CD vidéo, et délivrer des secondes données déformatées, et
un second décodeur (310) pour décoder les secondes données déformatées pour rétablir le signal A/V d'origine.

8. Procédé pour enregistrer des données sur un disque multisession ayant une session de CD-ROM ou lire des données à partir de ce dernier, dans laquelle session une zone blanche de début de session, une zone blanche de fin de session, et une zone utilisateur ayant chacune un format de CD-ROM, sont distinguées, **caractérisé en ce qu'**il comporte les étapes consistant à :
(a) coder des signaux audio et/ou vidéo (A/V) reçus dans un format de DVD pour délivrer un flux A/V,
(b) formater le flux A/V dans un système de fichiers prédéterminé pour une application DVD, et
(c) écrire des données formatées dans le système de fichiers prédéterminé dans la zone utilisateur, formater des données pour la zone blanche de début de session et la zone blanche de fin de session dans un format de CD-ROM, et écrire les données à format de CD-ROM dans la zone blanche de début de session et la zone blanche de fin de session, pour délivrer des premières données formatées.

9. Procédé selon la revendication 8, comportant en outre les étapes consistant à :
(d) coder des signaux audio et/ou vidéo (A/V) reçus conformément à une application CD pour délivrer un flux A/V,
(e) formater le flux A/V dans un format d'application CD pour délivrer des secondes données formatées, et
(f) écrire les premières données formatées dans un format de session de CD-ROM et écrire les secondes données formatées dans un format de session de CD, pour délivrer des données à format de CD multisession.

10. Procédé selon la revendication 8, dans lequel le système de fichiers prédéterminé est un format de disque universel (UDF).

11. Procédé selon la revendication 8, dans lequel le système de fichiers prédéterminé est un format de transition de format de disque universel (UDF).

12. Procédé selon la revendication 8, comportant en outre les étapes consistant à :
(d) déterminer si un disque inséré dans un lecteur est un CD vidéo, un CD audio ou un CD multisession ayant une session de CD-ROM,
(e) déterminer si un système de fichiers prédéterminé existe, s'il est déterminé à l'étape (d) que le disque est un CD multisession et qu'une session correspondante est une session de CD-ROM,
(f) déformater une application DVD sur la zone utilisateur du disque lorsque le système de fichiers prédéterminé existe et délivrer des premières données déformatées, et
(g) décoder les premières données déformatées pour rétablir le signal A/V d'origine.

13. Procédé selon la revendication 12, comportant en outre les étapes consistant à :
(h) déformater une application CD qui a été lue à partir d'un disque inséré, s'il est déterminé à l'étape (d) que le disque est un CD vidéo ou un CD audio, ou que le disque est un CD multisession et qu'une session vidéo correspondante est une session de CD audio ou une session de CD vidéo, et délivrer des secondes données déformatées, et
(i) décoder les secondes données déformatées pour rétablir le signal A/V d'origine.

14. Procédé selon la revendication 8, comportant en outre les étapes consistant à :
(d) déterminer si un disque inséré dans un lecteur est un CD audio, en analysant des informations de commande dans une sous-zone Q de la zone blanche de début de session du disque, et si le disque inséré est un CD audio, reproduire le CD audio, et sinon, déterminer si oui ou non le disque est un CD vidéo en analysant les informations de la table de matières (TOC),
(e) analyser les informations de CD vidéo sur la première piste et lire un CD vidéo conformément à des informations de CD vidéo analysées, s'il est déterminé à l'étape (d) que le disque est un CD vidéo, et, s'il est déterminé à l'étape (d) que le disque n'est pas un CD vidéo, analyser les informations TOC pour déterminer si oui ou non le disque est un CD multisession incluant une session de CD-ROM, et
(f) analyser un format UDF et lire des données de DVD s'il est déterminé à l'étape (e) que le disque est un CD multisession et qu'une session correspondante est une session de CD-ROM.

15. Procédé selon la revendication 8, comportant en outre les étapes consistant à :
(d) déterminer si un disque inséré dans un lecteur à double usage DVD/CD-ROM est un DVD ou un CD, en vérifiant la structure physique du disque,
(e) déterminer si le disque est un CD audio, un CD vidéo ou un CD multisession ayant une session de CD-ROM, s'il est déterminé à l'étape (d) que la structure physique du disque est un CD,
(f) déterminer si un système de fichiers prédéterminé existe, s'il est déterminé à l'étape (d) que la structure physique du disque est un DVD ou s'il est déterminé à l'étape (e) que le disque est un CD multisession et qu'une session correspondante est une session de CD-ROM,
(g) déformater une application DVD lue à partir du disque inséré, lorsque le système de fichiers prédéterminé existe, et délivrer des premières données déformatées, et
(h) décoder les premières données déformatées pour rétablir le signal A/V d'origine.

16. Procédé selon la revendication 15, comportant en outre les étapes consistant à :
(i) déformater une application CD, qui a été lue à partir du disque inséré, s'il est déterminé à l'étape (e) que le CD est un CD vidéo ou un CD audio, ou que le CD est un CD multisession et qu' une session correspondante est une session de CD audio ou une session de CD vidéo, et délivrer des secondes données déformatées, et
(j) décoder les secondes données déformatées pour rétablir le signal A/V d'origine.

17. Procédé selon la revendication 8, comportant en outre les étapes consistant à :
(d) déterminer si un disque inséré dans un lecteur à double usage DVD/CD-ROM est un DVD ou un CD, en analysant la structure physique du disque,
(e) déterminer si le disque est un CD audio, en analysant des informations de commande dans une sous-zone Q de la zone blanche de début de session du disque, s'il est déterminé à l'étape (d) que la structure physique du disque est un CD, et lire un CD audio si le disque est un CD audio, et, sinon, déterminer si oui ou non le disque est un CD vidéo en analysant les informations TOC,
(f) analyser des informations de CD vidéo sur la première piste et lire un CD vidéo conformément aux informations de CD vidéo analysées, s'il est déterminé à l'étape (e) que le disque est un CD vidéo, et, s' il est déterminé à l'étape (e) que le disque n'est pas un CD vidéo, déterminer si oui ou non le CD est un CD multisession ayant une session de CD-ROM, et
(g) analyser un format UDF et lire des données de DVD s'il est déterminé à l'étape (e) que le disque a la structure physique d'un DVD ou s'il est déterminé à l'étape (f) que le CD est un CD multisession et qu'une session correspondante est une session de CD-ROM.
